# EUROPEAN PATENT APPLICATION

(11) **EP 2 595 355 A1**
(43) Date of publication of application: **22.05.2013**
(21) Application number: 11845117.8
(22) Date of filing: 14.10.2011
(51) Int. Cl.: H04L 29/06

(54) **METHOD AND DEVICE USED IN ACQUIRING PARAMETERS FOR GENERAL ANALYSIS OF PROTOCOL AND IN GENERAL ANALYSIS OF PROTOCOL**

(30) Priority: 29.11.2010 CN 201010578874
(71) Applicant: Huawei Technologies Co., Ltd., Shenzhen, Guangdong 518129 (CN)
(72) Inventor: CHEN, Jian, Guangdong 518129 (CN); ZOU, Rong, Guangdong 518129 (CN); ZHOU, Hong, Guangdong 518129 (CN); HU, Xinyu, Guangdong 518129 (CN); LUO, Zhidan, Guangdong 518129 (CN)
(74) Representative: Maiwald Patentanwalts GmbH
(86) International application number: PCT/CN2011/080795
(87) International publication number: WO 2012/071951

(57) **Abstract**

The present invention provides a parameter acquisition method and device for general protocol parsing and a general protocol parsing method and device. The method includes: acquiring a message to be parsed; according to a preset state transition table, performing regular expression matching on the message to be parsed, and acquiring a state number and location information of a character corresponding to a matched matching rule; and acquiring the matching rule corresponding to the state number according to a preset rule matching table, and outputting a required field according to the matching rule, the location information, and the buffered message to be parsed, where the matching rule is an initial point sub-rule or an end point sub-rule. Embodiments of the present invention may implement general parsing on the protocol.

## Description

This application claims priority to Chinese Patent Application No. 201010578874.7, filed with the Chinese Patent Office on November 29, 2010 and entitled "PARAMETER ACQUISITION METHOD AND DEVICE FOR GENERAL PROTOCOL PARSING AND GENERAL PROTOCOL PARSING METHOD AND DEVICE", which is incorporated herein by reference in its entirety.

### FIELD OF THE INVENTION

The present invention relates to network communications technologies, and in particular, to a parameter acquisition method and device for general protocol parsing and a general protocol parsing method and device.

### BACKGROUND OF THE INVENTION

In a network, both sides of communication perform communication based on a standard protocol. Parsing of a network protocol refers to that a protocol head and a protocol tail of a network data packet are analyzed through a program, to understand behaviors of information and relevant data packets during the generation and transmission process. In essence, for both sides of the network communication, the process of communication is a process of performing message parsing on the network data packet according to a standard protocol. Protocol parsing of the network equipment is usually performed based on a protocol stack. The protocol stack is a hierarchical parsing system, and after the corresponding head at each layer is processed, head data is peeled off, and the rest is delivered to an upper layer until an application layer. In the application layer, a corresponding application processing module performs field analyzing on an application protocol according to specific application types to check whether some preset conditions are matched, so as to extract some valuable fields.

When an existing protocol is parsed, usually a process of locating a delimiter-comparing a field-storing content is adopted. The delimiter differs with different protocols. For example, in protocols, such as HTTP and RTSP, "\r\n" indicates ending of a field, and space and ";" act as delimiters in the SIP. Comparing the field refers to finding a required field. For example, if the required fields in the SIP message are INVITE and transport, an INVITE field and a transport field need to be found through comparing, afterward, the content corresponding to the INVITE field and the transport field is stored. The foregoing process is repeated until the message ends or satisfies a preset condition of ending.

With a method for parsing a protocol based on the protocol stack, it is needed to perform coding processing separately on all the protocols to be parsed. Because new application protocols emerge endlessly, for the method for parsing a protocol based on the protocol stack, a large amount of workload for maintenance is needed, a problem exists in expansibility, and a long period is required for supporting new protocol parsing. With a non-general parsing method, difficulty in implementation in manner of hardware is increased, and a bottleneck exists in the performance.

### SUMMARY OF THE INVENTION

Embodiments of the present invention provide a parameter acquisition method and device for general protocol parsing and a general protocol parsing method and device, so as to solve a problem in the prior art that a protocol to be parsed needs to be processed separately, and implement general parsing of all protocols.

In one aspect, an embodiment of the present invention provides a parameter acquisition method for general protocol parsing, which includes:
reading a regular expression corresponding to a protocol field that needs to be matched, where the regular expression at least includes an initial point sub-rule and an end point sub-rule; and
performing compiling to form a state transition table and a rule matching table according to the initial point sub-rule and the end point sub-rule, where correspondence between an input character and a transited state is stored in the state transition table, and correspondence between an accepting state in the state transition table and the initial point sub-rule or the end point sub-rule is stored in the rule matching table.

In another aspect, an embodiment of the present invention provides a general protocol parsing method, which includes:
acquiring a message to be parsed;
according to a preset state transition table, performing regular expression matching on the message to be parsed, and acquiring a state number and location information of a character corresponding to a matched matching rule; and
acquiring the matching rule corresponding to the state number according to a preset rule matching table, and outputting a required field according to the matching rule, location information, and the buffered message to be parsed, where the matching rule is an initial point sub-rule or an end point sub-rule.

In one aspect, an embodiment of the present invention provides a parameter acquisition device for general protocol parsing, which includes:
a reading module, configured to read a regular expression corresponding to a protocol field that needs to be matched, where the regular expression at least includes an initial point sub-rule and an end point sub-rule; and
a compiling module, configured to perform compiling to form a state transition table and a rule matching table according to the initial point sub-rule and the end point sub-rule, where correspondence between an input character and a transited state is stored in the state transition table, and correspondence between an accepting state in the state transition table and the initial point sub-rule or the end point sub-rule is stored in the rule matching table.

In another aspect, an embodiment of the present invention provides a general protocol parsing device, which includes:
a message filter, configured to acquire a message to be parsed; and
a matching module, configured to, according to a preset state transition table, perform regular expression matching on the message to be parsed, and acquire a state number and location information of a character corresponding to a matched matching rule; and acquire the matching rule corresponding to the state number according to a preset rule matching table, and output a required field according to the matching rule, the location information, and the buffered message to be parsed, where the matching rule is the initial point sub-rule or the end point sub-rule.

It can be seen from the foregoing technical solutions that, in the embodiments of the present invention, the protocol field that needs to be parsed is described through a regular expression, and the state transition table and the rule matching table that are used to parse the protocol are obtained according to the initial point sub-rule and the end point sub-rule in the regular expression, so that a part, which matches the initial point sub-rule and the end point sub-rule, in the message to be parsed is obtained, the protocol field that needs to be parsed is further obtained, and it is unnecessary to obtain a corresponding delimiter according to a characteristic of each protocol, thereby implementing general processing on the protocol.

### BRIEF DESCRIPTION OF THE DRAWINGS

To illustrate the technical solutions according to the embodiments of the present invention or in the prior art more clearly, the accompanying drawings required for describing the embodiments or the prior art are introduced below briefly. Apparently, the accompanying drawings in the following descriptions merely show some embodiments of the present invention, and persons of ordinary skill in the art can obtain other drawings according to the accompanying drawings without creative efforts.

FIG. 1 is a flow chart of a method in Embodiment 1 of the present invention;

FIG. 2 is a flow chart of a method in Embodiment 2 of the present invention;

FIG. 3 is a flow chart of a method in Embodiment 3 of the present invention;

FIG. 4 is a schematic structural diagram of a device in Embodiment 4 of the present invention;

FIG. 5 is a schematic structural diagram of a device in Embodiment 5 of the present invention; and

FIG 6 is a schematic structural diagram of a device in Embodiment 6 of the present invention.

### DETAILED DESCRIPTION OF THE EMBODIMENTS

Specific implementation procedures of the present invention are illustrated through embodiments below. It is obvious that the embodiments to be described below are only a part rather than all of the embodiments of the present invention. All other embodiments obtained by persons skilled in the art based on the embodiments of the present invention without creative efforts shall fall within the protection scope of the present invention.

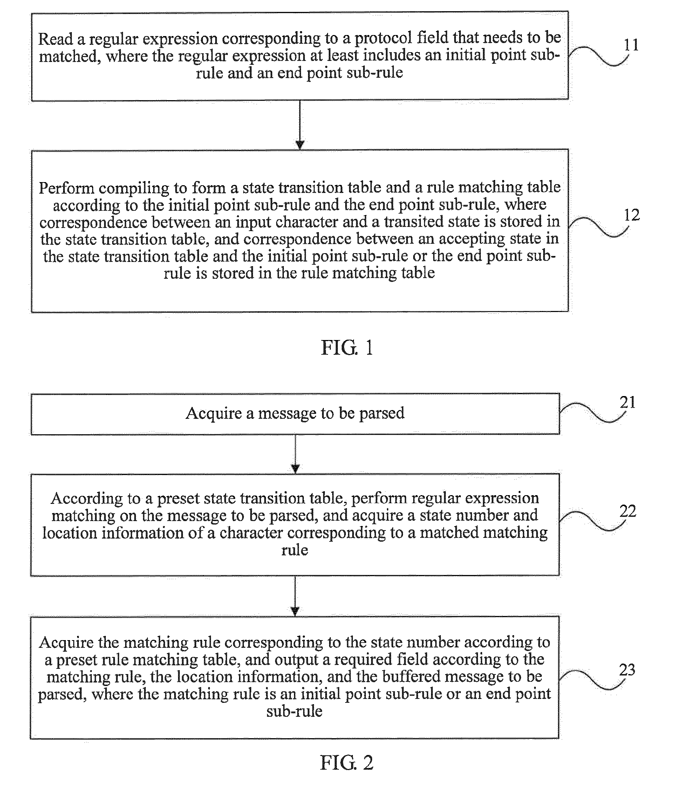

FIG. 1 is a flow chart of a method in Embodiment 1 of the present invention, which includes:

Step 11: Read a regular expression (regular expression) corresponding to a protocol field that needs to be matched, where the regular expression at least includes an initial point sub-rule and an end point sub-rule.

The regular expression describes a string matching mode, which may be used to perform text matching, where the text matching refers to that a part, which matches a given regular expression, in a given string is searched for. If a regular expression *AUTH[0-9]{10} exists, it indicates that a string like this needs to be found in a text to be matched, and a feature thereof is that a character string AUTH exists in the text, and the string is directly followed by ten characters of random numbers from 0 to 9. In this case, a character text which matches the regular expression may be: http://AUTH2009120901.html/~index, where "AUTH2009120901" is a word string which may match the regular expression.

The initial point sub-rule describes an initial location of the protocol field that needs to be matched, and the end point sub-rule describes an end location of the protocol field that needs to be matched. The initial point sub-rule and the end point sub-rule may be separately described, and for example, a field is described with two regular expressions that are corresponding to the initial point sub-rule and the end point sub-rule, respectively. The initial point sub-rule and the end point sub-rule may also be described in one regular expression by adding special marks, and for example, < may indicate that the content before is the initial point sub-rule and > indicates that the content after is the end point sub-rule.

Step 12: Perform compiling to form a state transition table and a rule matching table according to the initial point sub-rule and the end point sub-rule, where correspondence between an input character and a transited state is stored in the state transition table, and correspondence between an accepting state in the state transition table and the initial point sub-rule or the end point sub-rule is stored in the rule matching table.

After the state transition table and the rule matching table are obtained and when a message is parsed, a general protocol parsing device can acquire, according to the state transition table and the rule matching table, the protocol field, which needs to be matched, from the message to be parsed.

The state transition table may be generated through a general method. For example, the state transition table may be generated through Perl compatible regular expressions (Perl Compatible Regular Expressions, PCRE) compiler, where correspondence between an input character and a transited state is stored in the table, and when a character string in the input message to be parsed matches the initial point sub-rule or the end point sub-rule, a corresponding state number and location information of a character may be output according to the state transition table.

The rule matching table may be generated through a general method for formal processing. For example, after a general rule matching table is generated through PCRE, a newly added parameter "initial/end attribute" represents the initial point sub-rule and the end point sub-rule corresponding to the same regular expression, respectively. Specifically, according to a general manner, the initial point sub-rule and the end point sub-rule corresponding to each regular expression each act as an independent matching rule; however, in the embodiment of the present invention, one regular expression is corresponding to one matching rule, and the initial point sub-rule or the end point sub-rule corresponding to the regular expression is represented by "initial/end attribute". In this way, the number of matching rules may be saved, and resources required for the rule matching table is reduced. In the embodiment of the present invention, correspondence between a state and a rule is stored in the rule matching table, and according to the rule matching table, the matching rule corresponding to the input state number may be output, so that a required protocol field can be determined according to the matching rule, the location information, and the buffered message to be parsed, where the matching rule is the initial point sub-rule or the end point sub-rule. For example, the matching rule is indicated as the initial point sub-rule, an initial point of the required protocol field is a character that is corresponding to the location information and is in the buffered message to be parsed. Specifically, if characters in the buffered message to be parsed are a, b, c, ..., in turn, and if the location information is 2, the initial point of the required protocol field is b. For the end point sub-rule, an end point may be determined in a similar manner, and afterward, a character between two points which include an initial point and an end point in the buffered message to be parsed is used as the required protocol field.

In this embodiment, the protocol field that needs to be parsed is described through a regular expression, and the state transition table and the rule matching table that are used for protocol parsing may be obtained according to the initial point sub-rule and the end point sub-rule in the regular expression, so that a part, which matches the initial point sub-rule and the end point sub-rule, in the message to be parsed may be obtained, the protocol field that needs to be parsed is further obtained, and it is unnecessary to acquire a corresponding delimiter according to a characteristic of each protocol, thereby implementing general processing on the protocol.

FIG. 2 is a flow chart of a method in Embodiment 2 of the present invention, which includes:

Step 21: Acquire a message to be parsed.

All received messages may be acquired and served as messages to be parsed. A received message may also be filtered, and the filtered message is the message to be parsed. Specifically, a keyword may be set, when the received message includes the set keyword, the received message is determined to be the message to be parsed.

Step 22: According to a preset state transition table, perform regular expression matching on the message to be parsed, and acquire a state number and location information of a character corresponding to a matched matching rule.

Step 23: Acquire the matching rule corresponding to the state number according to a preset rule matching table, and output a required field according to the matching rule, location information, and the buffered message to be parsed, where the matching rule is an initial point sub-rule or an end point sub-rule.

Reference may be made to the description in Embodiment 1 for specific content of the state transition table and the rule matching table.

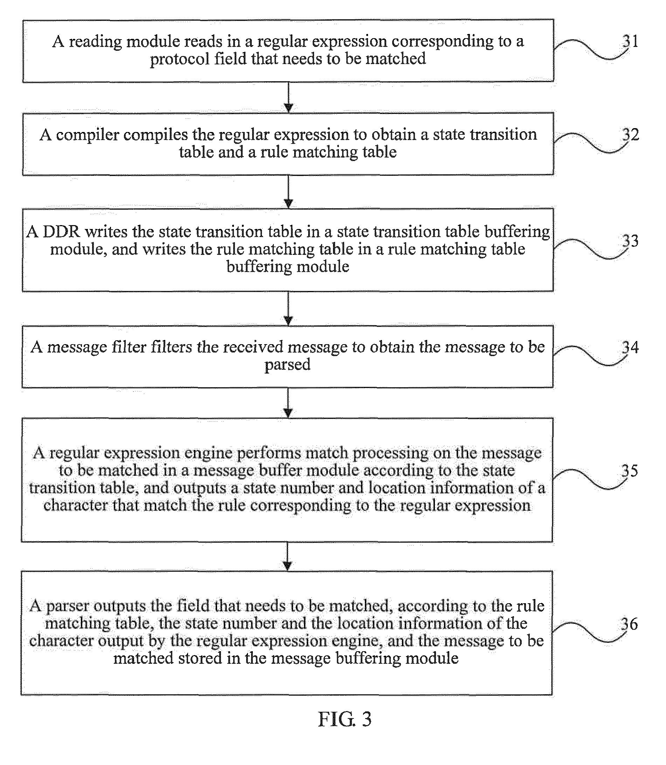

FIG. 3 is a flow chart of a method in Embodiment 3 of the present invention, and in this embodiment, an example that an http get message is parsed is taken. It is assumed that a field that needs to be acquired in the http get message is: a GET field, a user-agent field, a host field and a cookie field, and each field is ended with \r\n.

Referring to FIG. 3, this embodiment includes the following steps:

Step 31: A reading module reads a regular expression corresponding to a protocol field that needs to be matched.

An example is taken with the foregoing http get message, fields that need to be matched include a GET field, a user-agent field, a host field and a cookie field.

The corresponding regular expressions are as follows:

1) pcre:/^ GET[\x20\x09]<.*>\x2\r\n/is

Meaning: starting from payload (payload), searching for a GET word string, which is followed by a space (corresponding to \x20) or a tab (corresponding to \09), and then followed by characters of any length being the content of the GET field, and is ended with carriage return and line feed.

2) pcre:/user-agent:<.*>\x2\r\n/is

Meaning: user-agent: is matched in any location, and then followed by characters of any length being the content of the user-agent field, and is ended with carriage return and line feed.

3) pcre:/host:<.*>\x2\r\n/is

Meaning: host: is matched in any location, and then followed by characters of any length being the content of the host field, and is ended with carriage return and line feed.

4) pcre:/cookie:<.*>\x2\r\n/is

Meaning: cookie: is matched in any location, and then followed by characters of any length being the content of the cookie field, and is ended with carriage return and line feed.

In the foregoing four regular expressions:

Parsing of each protocol field is described with a rule, a rule is divided into three parts, a first part indicates an initial point of a field, such as ^ GET[\x20\x09], a second part indicates content of a field, such as <.*>, and a third part indicates ending of a field, such as \x2\r\n.

"Pcre:" and "is" are marks of the syntax attribute of the regular expression. The part between two slashes "/'" is the regular expression.

An angle bracket <> and \x2 are assigned with special meanings, they are not a part of a standard regular expression, but some special marks set in the rule of the embodiment of the present invention, and in the embodiment of the present invention, the rule is disassembled according to them.

< indicates that the content before is an initial matching rule.

> indicates that the content after is an end matching rule.

\xn indicates the number of bytes that need to be rolled back is n after field matching ends. For example, \x2 indicates that 2 characters need to be rolled back.

Step 32: A compiler compiles the regular expression to obtain a state transition table and a rule matching table. Afterward, the tables may be stored in a memory, such as in a double data rate synchronous dynamic random access memory (Double Data Rate Synchronous Dynamic Random Access Memory, DDR SDRAM, briefly referred to as DDR).

The compiler may be used to compile the regular expression, the input of the compiler are the foregoing 4 regular expressions, and processing of the compiler may be divided into preprocessing and processing, where a sub-rule corresponding to each regular expression may be obtained through the preprocessing, and a state transition table and a rule matching table are obtained through the processing according to a result of the preprocessing.

First, the four regular expressions are preprocessed to obtain sub-rules after disassembling, which are shown in Table 1 as follows:

**Table 1**

| Rule number | Initial point sub-rule | End point sub-rule |
|---|---|---|
| 1 | pcre:/^ GET[\x20\x09]/is | pcre:/\r\n/is, rollback 2 after matching |
| 2 | pcre:/user-agent:/is | pcre:/\r\n/is, rollback 2 after matching |
| 3 | pcre:/host:/is | pcre:/\r\n/is, rollback 2 after matching |
| 4 | pcre:/cookie:/is | pcre:/\r\n/is, rollback 2 after matching |

After the foregoing preprocessing, a coder performs processing according to the rules in Table 1 to obtain a state transition table and a rule matching table.

The state transition table may be stored in a state transition table buffering module, the state transition table buffering module may be a deterministic finite automation (deterministic finite automation, DFA), and may also be a nondeterministic finite automaton (nondeterministic finite automaton, NFA). By taking the DFA as an example in the following, the state transition table may be as shown in Table 2:

**Table 2**

| | 0 | 1 | 2 | 3 | 4 | ··· | a | b | c | d | e | f | g | h | ··· |
|---|---|---|---|---|---|---|---|---|---|---|---|---|---|---|---|
| S1 | | | | | | | S2 | | | | | | | | |
| S2 | | | | | | | | S3 | | | | | | | |
| S3 (acc) | | | | | | | | | S4 | | | | | | |

In the state transition table, vertical characters (0, 1, ... a, b, ...) indicate characters in a received message, horizontal S1, S2, and S3 indicate states. For example, if a current state is S1 and an input character is "a", the current state transits to a state S2. In addition, a state with a mark (specifically, S3 (acc)) is an accepting state, which indicates that a certain rule is matched, and when the state transition table transits to the state, a matching result is output, and is specifically a state number and a location of a matched message. For example, the foregoing state with a mark is S3, when the state transits to S3, a number (3) of S3 and a location of a corresponding character (b) (for example, if ab is input, the location is 2) are output.

It can be understood that, the foregoing state transition table is merely an example, and is not limited to the foregoing three states. In addition, the foregoing transited S2, S3, S4 are merely examples, and each cell in Table 2 should have a corresponding transition state.

The rule matching table may be as shown in Table 3:

**Table 3**

| Accepting state | rule 6 | rule 5 | rule 4 | rule 3 | rule 2 | rule 1 | Initial/end attribute | Rollback attribute |
|---|---|---|---|---|---|---|---|---|
| S3 | 0 | 0 | 0 | 0 | 0 | 1 | 0 | |
| S4 | 0 | 0 | 0 | 0 | 1 | 0 | 0 | |
| S5 | 0 | 0 | 1 | 0 | 0 | 0 | 0 | |
| ··· | | | | | | | | |
| S10 | 1 | 1 | 0 | 0 | 0 | 0 | 1 | 2 |
| S11 | 0 | 0 | 1 | 1 | 1 | 1 | 1 | 2 |
| ··· | | | | | | | | |

In the rule matching table, rule 1 to rule 6 indicate matching rules, a corresponding number being "1" indicates matched, and "0" indicates not matched.

The initial/end attribute indicates that the state corresponds to the initial point sub-rule or the end point sub-rule, "0" indicates the initial sub-rule, and "1" indicates the end sub-rule.

A rollback attribute indicates the number of bytes with which the matching location should be rolled back.

For example, when the accepting state is S5, the matching rule is an initial sub-rule in rule4, if the rule4 is a rule4 shown in Table 1, it is obtained that an initial field of the field that needs to be matched is "cookie:".

It should be noted that, in the embodiment of the present invention, each protocol field that needs to be matched is independent to each other, does not nest with each other, and the case of an overlap region does not exist. At this time, after an initial point of a protocol field that needs to be matched is found, if an end point matching the end point sub-rule is found, it is determined that the end point is the end point corresponding to the found initial point. After both the initial point and the end point of a protocol field that needs to be matched are found, a protocol field that needs to be matched next time may be acquired. Therefore, referring to the rule matching table in FIG. 3, when an accepting state may correspond to multiple end point sub-rules, an end point closest to a found initial point is a required end point according to the location information.

Step 33: A DDR writes the state transition table in the state transition table buffering module, and writes the rule matching table in a rule matching table buffering module.

Regular expressions corresponding to different protocols may be compiled in advance, afterward, the state transition table and the rule matching table corresponding to different protocols are stored in the DDR, and afterward, when a protocol needs to be parsed, in the DDR, the state transition table and the rule matching table of the protocol that needs to be parsed are written in the state transition table buffering module and the rule matching table buffering module, respectively.

Preparation for protocol parsing may be completed through step 31 to step 33, afterward, parsing may be performed after the message is received.

Step 34: A message filter filters the received message to obtain a message to be parsed. Afterward, the message filter may store the message to be parsed in a message buffering module.

A keyword may be stored in the message filter in advance, when the received message includes the keyword, it is determined that the received message is the message to be parsed.

Step 35: A regular expression engine acquires the state transition table from the state transition table buffering module and performs match processing on the message to be matched in the message buffering module according to the state transition table, and outputs a state number and location information of a character that match a rule corresponding to a regular expression.

After the message filter obtains the message to be parsed through filtering processing, the message filter may send control information to the regular expression engine to instruct the regular expression engine to perform the foregoing processing.

During matching process of the regular expression, state conversion may be performed on a character in the message to be parsed according to the state transition table shown in Table 2. For example, if an initial state is set as S1, when the character in the message to be parsed is a, the state transits to S2. When a rule is matched, it corresponds to an accepting state. For example, when the input is "GET\x20", a rule 1 is matched at this time, and the state transits to the accepting state at the time of \x20 (the corresponding character is space). It is assumed that the accepting state at this time is S3, a number "3" corresponding to S3 is output. In addition, the location information of "\x20" in the whole message is output. If the message is input in turn according to "GET\x20", then the location information is "4".

Step 36: A parser outputs a field that needs to be matched, according to the rule matching table in the rule matching table buffering module, the state number and the location information of the character output by the regular expression engine, and the message to be matched stored in the message buffering module.

Specifically, the rule corresponding to the state number is found through searching Table 3. For example, the state number output is 3, the rule corresponding to S3 is searched for. It is assumed that the corresponding rule is rule 1 at this time, and it is assumed that the initial/end attribute is indicated as a initial rule, it is obtained that the matched rule is: a initial rule of rule 1, afterward, a field is output according to the location information For example, if the location information at this time is "4", output from a 5^{th} character of the buffered message. Similarly, an end character may be found, in an end rule, "\r\n" occupies two characters, effective characters are characters before the two characters, and therefore, two characters need to be rolled back, that is, the end character is a character before the character "\r\n". It can be understood that, the foregoing regular expression engine may complete state transition as well as complete rule matching, and the parser acquires the required field according to the matched rule number and location information. That is, the regular expression engine is configured to, according to the preset state transition table, perform regular expression matching on the message to be parsed, output a corresponding state number and corresponding location information of a character when a regular expression is matched, and acquire a matching rule corresponding to the state number according to the preset rule matching table; and the parser is configured to output a required field according to the matching rule and the location information.

In this embodiment, regular expression matching is performed on the message to be parsed, and it is unnecessary to acquire a corresponding delimiter according to the characteristic of each protocol, thereby implementing the general processing on the protocol. The method in this embodiment has generality, and with the method, parsing of the protocol is converted into the description of the regular expression, so the method is applicable to the parsing of different protocols, has good expansibility, and is capable of supporting a new protocol fast. The regular expression engine and the parser are stable and can be solidified in a manner of hardware, so the performance thereof is improved greatly.

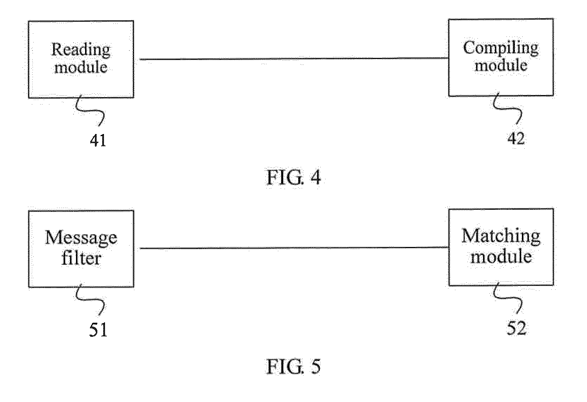

FIG. 4 is a schematic structural diagram of a device in Embodiment 4 of the present invention, and the device includes a reading module 41 and a compiling module 42. The reading module 41 is configured to read a regular expression corresponding to a protocol field that needs to be matched, where the regular expression at least includes an initial point sub-rule and an end point sub-rule. A compiling module 42 is configured to perform compiling to form a state transition table and a rule matching table according to the initial point sub-rule and the end point sub-rule, where correspondence between an input character and a transited state is stored in the state transition table, and correspondence between an accepting state in the state transition table and the initial point sub-rule or the end point sub-rule is stored in the rule matching table.

In this embodiment, the protocol field that needs to be parsed is described in a regular expression, the state transition table and the rule matching table that are used for protocol parsing are obtained according to the regular expression, and it is unnecessary to acquire a corresponding delimiter according to a characteristic of each protocol, thereby implementing general processing on a protocol.

FIG. 5 is a schematic structural diagram of a device in Embodiment 5 of the present invention, and the device includes a message filter 51 and a matching module 52. The message filter 51 is configured to acquire a message to be parsed. The matching module 52 is configured to, according to a preset state transition table, perform regular expression matching on the message to be parsed, and acquire a state number and location information of a character corresponding to a matched matching rule; acquire the matching rule corresponding to the state number according to a preset rule matching table, and output a required field according to the matching rule, the location information, and the buffered message to be parsed, where the matching rule is an initial point sub-rule or an end point sub-rule.

In this embodiment, regular expression matching is performed on the message to be parsed, and it is unnecessary to acquire a corresponding delimiter according to a characteristic of each protocol, thereby implementing general processing on a protocol.

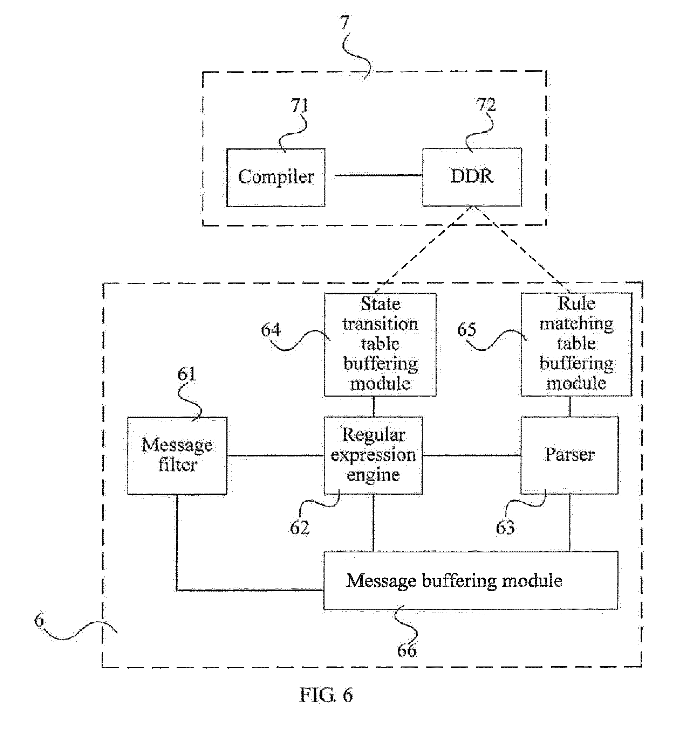

FIG. 6 is a schematic structural diagram of a device in Embodiment 6 of the present invention, and the device includes a message filter 61 and a matching module, where the matching module includes a regular expression engine 62 and a parser 63. The regular expression engine 62 is configured to, according to a preset state transition table, perform regular expression matching on a message to be parsed and output a state number and location information of a character corresponding to a matched matching rule. The parser 63 is configured to acquire the matching rule corresponding to the state number according to a preset rule matching table, and output a required field according to the matching rule, the location information, and the buffered message to be parsed. Alternatively, the regular expression engine 62 is configured to, according to a preset state transition table, perform regular expression matching on a message to be parsed and output a state number and location information of a character corresponding to a matched matching rule, and acquire the matching rule corresponding to the state number according to a preset the rule matching table. The parser 63 is configured to output a required field according to the matching rule, the location information, and the buffered message to be parsed.

A device 6 in this embodiment may further include a state transition table buffering module 64, a rule matching table buffering module 65, and a message buffering module 66. The state transition table buffering module 64 is configured to acquire the state transition table, where correspondence between an input character and a transited state is stored in the state transition table. The rule matching table buffering module 65 is configured to acquire the rule matching table, where correspondence between an accepting state in the state transition table and an initial point sub-rule or an end point sub-rule is stored in the rule matching table. The message buffering module 66 is configured to buffer the message to be parsed.

Information stored in the state transition table buffering module 64 and the rule matching table buffering module 65 may be acquired from an external module 7, the external module 7 includes a compiler 71 and a DDR 72, where the compiler 71 may include the device shown in FIG. 4, and is configured to compile regular expressions corresponding to different protocols to obtain the state transition table and the rule matching table. Afterward, the state transition table and the rule matching table corresponding to different protocols are stored in the DDR 72. When a protocol needs to be parsed, the DDR 72 may write the state transition table and the rule matching table that are corresponding to the protocol in the state transition table buffering module 64 and the rule matching table buffering module 65, respectively.

The device 6 in this embodiment may be located in a field programmable gate array (Field Programmable Gate Array, FPGA).

In this embodiment, regular expression matching is performed on the message to be parsed, and it is unnecessary to acquire a corresponding delimiter according to a characteristic of each protocol, thereby implementing general processing on a protocol. The method in this embodiment has generality, and with the method, parsing of a protocol is converted into the description of a regular expression, so it is applicable to the parsing of different protocols, has good expansibility, and is capable of supporting a new protocol fast. The regular expression engine and the parser are stable and can be solidified in a manner of hardware, so the performance thereof is improved greatly.

It can be understood that for the characteristics in the devices, reference can be made to the relative characteristics in the foregoing methods.

Those of ordinary skill in the art should understand that all or a part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a ROM, a RAM, a magnetic disk or an optical disk.

The foregoing description is merely about exemplary embodiments of the present invention, but not intended to limit the protection scope of the present invention. Any variation and replacement easily derived by persons skilled in the art within the technical scope disclosed by the present invention should fall within the protection scope of the present invention. Therefore, the protection scope of the present invention is subject to the appended claims.

## Claims

1. A parameter acquisition method for general protocol parsing, comprising:
reading a regular expression corresponding to a protocol field that needs to be matched, wherein the regular expression at least comprises an initial point sub-rule and an end point sub-rule; and
performing compiling to form a state transition table and a rule matching table according to the initial point sub-rule and the end point sub-rule, wherein correspondence between an input character and a transited state is stored in the state transition table, and correspondence between an accepting state in the state transition table and the initial point sub-rule or the end point sub-rule is stored in the rule matching table.

2. The method according to claim 1, wherein the initial point sub-rule describes an initial location of the protocol field that needs to be matched, and the end point sub-rule describes an end location of the protocol field that needs to be matched.

3. A general protocol parsing method, comprising:
acquiring a message to be parsed;
performing, according to a preset state transition table, regular expression matching on the message to be parsed, and acquiring a state number and location information of a character corresponding to a matched matching rule; and
acquiring the matching rule corresponding to the state number according to a preset rule matching table, and outputting a required field according to the matching rule, the location information, and the buffered message to be parsed, wherein the matching rule is an initial point sub-rule or an end point sub-rule.

4. The method according to claim 3, wherein after the acquiring the message to be parsed, the method further comprises:
acquiring the state transition table and the rule matching table; wherein correspondence between an input character and a transited state is stored in the state transition table, and correspondence between an accepting state in the state transition table and the initial point sub-rule or the end point sub-rule is stored in the rule matching table.

5. A parameter acquisition device for general protocol parsing, comprising:
a reading module, configured to read a regular expression corresponding to a protocol field that needs to be matched, wherein the regular expression at least comprises an initial point sub-rule and an end point sub-rule; and
a compiling module, configured to perform compiling to form a state transition table and a rule matching table according to the initial point sub-rule and the end point sub-rule, wherein correspondence between an input character and a transited state is stored in the state transition table, and correspondence between an accepting state in the state transition table and the initial point sub-rule or the end point sub-rule is stored in the rule matching table.

6. The method according to claim 5, wherein the initial point sub-rule describes an initial location of the protocol field that needs to be matched, and the end point sub-rule describes an end location of the protocol field that needs to be matched.

7. A general protocol parsing device, comprising:
a message filter, configured to acquire a message to be parsed; and
a matching module, configured to perform, according to a preset state transition table, regular expression matching on the message to be parsed, and acquire a state number and location information of a character corresponding to a matched matching rule; and acquire the matching rule corresponding to the state number according to a preset rule matching table, and output a required field according to the matching rule, the location information, and the buffered message to be parsed, wherein the matching rule is an initial point sub-rule or an end point sub-rule.

8. The device according to claim 7, wherein the matching module comprises:
a regular expression engine and a parser, wherein
the regular expression engine is configured to perform, according to the preset state transition table, the regular expression matching on the message to be parsed, output the state number and the location information of the character corresponding to the matched matching rule; and the parser is configured to acquire the matching rule corresponding to the state number according to the preset rule matching table, and output the required field according to the matching rule, the location information, and the buffered message to be parsed; or
the regular expression engine is configured to perform, according to the preset state transition table, the regular expression matching on the message to be parsed, output the state number and the location information of the character corresponding to the matched matching rule, and acquire the matching rule corresponding to the state number according to the preset rule matching table; and the parser is configured to output the required field according to the matching rule, the location information, and the buffered message to be parsed.

9. The device according to claim 7 or 8, further comprising:
a state transition table buffering module, configured to acquire the state transition table, wherein correspondence between an input character and a transited state is stored in the state transition table; and
a rule matching table buffering module, configured to acquire the rule matching table, wherein correspondence between an accepting state in the state transition table and the initial point sub-rule or the end point sub-rule is stored in the rule matching table.
